# EUROPEAN PATENT SPECIFICATION

(11) **EP 2 243 992 B1**
(45) Date of publication and mention of the grant of the patent: **27.02.2013**
(21) Application number: 09158577.8
(22) Date of filing: 23.04.2009
(51) Int. Cl.: F16L 33/207, F16L 13/14

(54) **High pressure pipe coupling construction**
Kupplungsstruktur für ein Hochdruckrohr
Construction de raccord pour un tuyau à haute pression

(43) Date of publication of application: 27.10.2010
(73) Proprietor: Pipelife Nederland B.V., 1601 MA Enkhuizen (NL)
(72) Inventor: Cloos, Peter Jeroen, 1602 HZ, Enkhuizen (NL); Dalmolen, Lambertus Gerrit Peter, 1019 SE, Amsterdam (NL)
(74) Representative: Ketelaars, Maarten F.J.M.

(56) References cited:
- EP-A1- 2 045 501
- WO-A1-02/090812
- WO-A1-03/093718
- WO-A1-2007/020447
- DE-A1- 3 520 800
- US-A1- 2005 051 227

## Description

The invention is related to a high pressure pipe coupling construction according to the preamble of claim 1.

Such a coupling construction is known from EP-A-2045501, and relies on the clamping force which is exerted by the sleeve clamping parts on the pipe wall. Initially, the pipe wall is introduced between the sleeve clamping parts which are at a relatively large distance from each other. Subsequently, by applying appropriate tooling which is known per se, the sleeve clamping parts are pressed towards one another whereby the pipe wall is squeezed. In this process, one or both sleeve clamping parts is/are plastically deformed, in such a way that a permanent connection between the pipe and the coupling is obtained. In particular, the threads of the reinforcement layer should be held clamped securely, as these threads play an important role in transferring forces between the pipe and the coupling.

However, in this respect the prior art coupling constructions may give rise to problems. These problems occur as a result of the circumstance that the axial clamping length, that is the length of the sleeve clamping parts, inevitably is limited. First of all such limited clamping length is necessary for enabling the insertion of the pipe wall in the annular space defined between the sleeve clamping parts. In case the axial dimension of the annular space is too long, it may become impossible to fully insert the pipe wall. Furthermore, a coupling with relatively long sleeve clamping parts is difficult to manufacture and the manufacturing costs thereof would be high. Also, the effectiveness of relatively long sleeve clamping parts with respect to force transfer is limited. It appears that force transfer mainly takes place over a rather short part of the sleeve clamping parts, which parts are thus highly stressed. The remaining, largest part of the sleeve clamping parts practically does not share in the transfer of forces. This leads to the risk that the relatively short part fails, which in the end would lead to the failure of the complete coupling construction.

Thus, in practice it appears that under certain circumstances the clamping length is too small to withstand the forces which occur in practice. Especially when operation takes place under high surface pressures of 20.000 bar.cm2 or more, the threads in the clamped area may start to slip as a result of which the coupling construction will fail.

The object of the invention is to provide a coupling construction of the type before which is fit for very high operating pressures and which does not run the risk of premature failure. This object is achieved by the characterising features of claim 1.

The coupling applied in this coupling construction has sleeve clamping parts which are of an axial dimension which is comparable to the traditional coupling. This means that the advantages of the traditional coupling, that is proper insertion of the pipe wall and acceptable manufacturing costs, are, maintained. In addition however, an extended sleeve part has been provided which provides several additional advantages to the coupling. This extended sleeve part can be attached to or integrated in the prior art coupling. It does not overlap the other coupling parts, which means that it can be easily applied, and in an economic way.

More importantly however, the extended sleeve part provides a highly improved connection between the pipe and the coupling. As mentioned before, the traditional coupling construction relied on the clamping action of the sleeve clamping parts on the pipe wall. The threads of the reinforcement layer are thereby held captive between said sleeve clamping parts as well. This effect is maintained in the inventive coupling construction as well. However, the extended sleeve part provides an additional effect which did not, or hardly, play a role in the traditional coupling construction and which greatly enhances the load which can be transferred.

This effect is comparable to the so-called capstan effect which occurs when winding an anchor cable around a bollard. The cable is wound around the bollard with a few windings. As a result thereof, when the free end of the cable is pulled with a relatively low holding force, e.g. by hand, said windings make that a large pulling force can be exerted in the cable. In the pipe according to the invention, the thread parts located at the pipe wall end which is clamped between the sleeve clamping parts are held with a certain holding force. Under the influence of the internal overpressure in the pipe, the pipe part outside the sleeve clamping parts which overlaps the extended sleeve part, is held pressed against said extended sleeve part. Consequently, the corresponding liner part of the pipe is also held pressed in outward direction. The thread parts which are wound around this liner part are unable to slip, because the thread parts located at the pipe wall end are held. Thus, the thread parts wound around the liner part at the position of the extended sleeve part may develop a high pulling force with respect to the liner, similar to the above cable wound around a bollard.

In the prior art coupling construction, only the effect of holding the threads at the clamped location will occur. However, just outside said location the pipe wall will try to expand under the influence of the internal overpressure. This expansion is counteracted by the threads, however the winding effect of the threads around said expanded section is appreciable less or even absent, thus, the beneficial capstan effect will be virtually absent, such that the pulling force in the threads cannot increase above the mere holding force at the clamped location.

The shape of the coupling, in particular of the extended sleeve part, is influenced in such a way that the pulling force can be maximized. Therefore, the inner surface of the outer sleeve clamping part and at least the adjoining inner surface part of the extended sleeve part, when seen in an axial cross section, are in line with each other. Both the sleeve clamping parts and the extended sleeve parts have cylindrical surfaces. The inner cylindrical surface of the outer sleeve clamping part is of the same diameter as the inner cylindrical surface of the extended sleeve part, at least at the transition between these parts.

Furthermore, with the aim of providing a smooth transition between the pipe part which is supported by the extended sleeve part, and the free part of the pipe, an inner surface of the extended sleeve part which is positioned at a location beyond the inner surface part of the extended sleeve part which adjoins the inner surface of the outer sleeve clamping part, when seen in an axial cross section, has a slightly widening shape or trumpet shape in the direction towards the free end of said extended sleeve part.

The length over which the pipe wall is supported with respect to the extended sleeve part may vary. With the aim of obtaining the desired capstan effect, preference is given to an embodiment according to which the sum of the axial length of the outer sleeve clamping part and the axial length of the extended sleeve part is at least 1,5 times the axial length of the inner sleeve clamping part. More preferably, the sum of the axial of the outer sleeve clamping part and the axial length of the extended sleeve part is at least 2 times the axial length of the inner sleeve clamping part.

A further improvement of the connection between the coupling and the pipe may be obtained by teeth on the inner surface of the outer sleeve. Preferably, the inner surface of the outer sleeve clamping part comprises relatively coarse teeth. Furthermore, the inner surface of the extended sleeve part comprises relatively fine teeth.

The coupling construction may be carried out in several ways, such as with a coupling which comprises a connection piece for connection to another coupling, or to a flange and the like.

The threads may be applied by winding these individually. However, an embodiment is also possible wherein the reinforcement comprises helically wound tapes which each comprise threads which are juxtaposed, when seen in circumferential direction of the pipe. The threads preferably consist of a material with a high strength and high stiffness, such as steel wire or aramid. As an example, the tensile modulus of elasticity may be more than 50 GPa. The coupling may consist of steel.

The invention will now be described further with respect to the embodiment shown in the drawing.
Figure 1 shows a partial longitudinal section through a coupling construction.
Figure 2 shows the view according to II of figure 1.

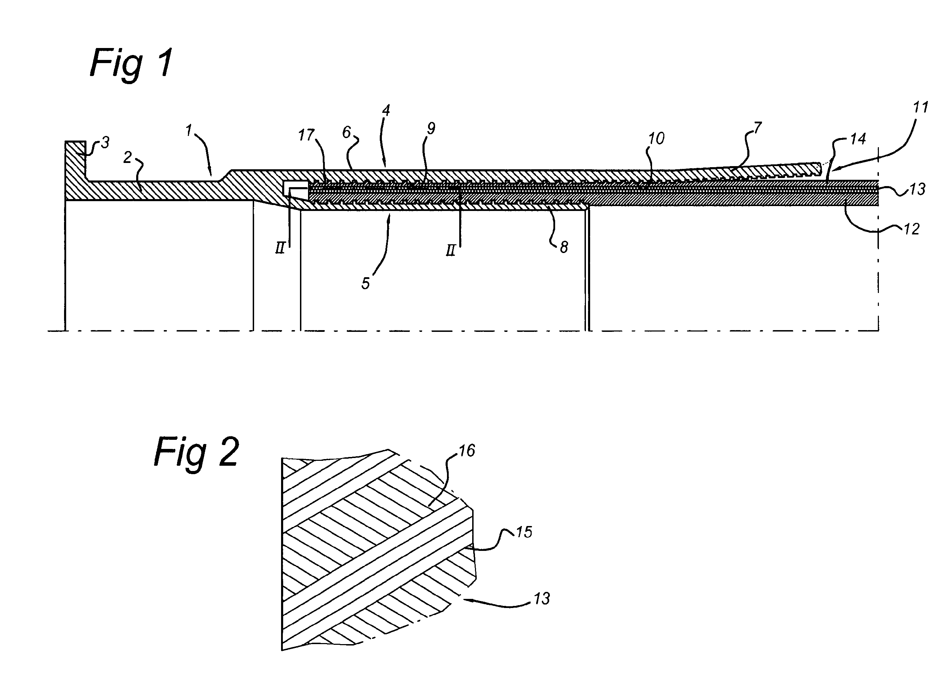

The coupling construction shown in figure 1 consists of the coupling 1 and the high pressure pipe 11. The coupling has a coupling piece 2, which can for instance be connected to a similar coupling in mirror fashion so as to connect two pipes together. Alternatively, the coupling piece may be provided with a flange 3 for connection to e.g. a vessel. Furthermore, the coupling 1 has an outer sleeve 4 and an inner sleeve 5. The coupling 1 may be of circular cross section, in which case said sleeves 4, 5 are coaxial.

The outer sleeve 4 consists of the outer sleeve clamping part 6 and the extended sleeve part 7 which forms a unity with the outer sleeve clamping part 6 in the embodiment shown. The inner sleeve 5 consists of the inner sleeve clamping part 8 which is opposite the outer sleeve clamping part 6 and overlaps same. The outer sleeve clamping part 6 has relatively coarse internal teeth, the extended sleeve part 7 has relatively fine internal teeth 10. The area of the extended sleeve part 7 which adjoins the outer sleeve clamping part 6 is in alignment with said outer sleeve clamping part, when seen in the longitudinal section of figure 1. In the case of a circular coupling piece 1, these parts merge smoothly into each other. Additionally, the area of the extended sleeve part 7 near the free end thereof may widen somewhat in radial direction, or is trumpet shaped.

The high-pressure pipe 11 comprises an inner lining 12, a reinforcement layer 13 and a coating 14. The reinforcement layer 13, which is shown in top view in figure 2, consists of helically wound threads 15,16 which are positioned at opposite angles. The piece of the wall 17 of the pipe 11 near the free end thereof is clamped between the outer sleeve clamping part 6 and the inner sleeve clamping part 8. Several existing tools can be used to this end; as these tools are well known, a further description thereof will be omitted. By clamping the wall 17 between these sleeve clamping parts 6, 8, also the threads 15, 16 are clamped.

As result of the inner pressure in the pipe 11, the pipe wall thereof outside the clamping parts 6, 8 is firmly pressed against the inner surface of the extended sleeve part 7. Thus, also the lining 12 of the pipe 11 is held firmly pressed in upward direction, and the part which overlaps the extended sleeve part 7. The threads 15, 16 of the reinforcement layer 13 are held between the sleeve clamping parts 6, 8, as mentioned before. Upon the application of a high internal pressure within the pipe 11, the threads 15, 16 are subjected to pulling forces. Due to the fact that the ends of the threads 15, 16 are held at the location of the sleeve clamping parts 6, 8, the parts of the threads which are positioned at the location of the extended sleeve part 7 are firmly pulled around the liner 12. Thereby, the so-called capstan effect is obtained which means that the threads 15, 16 are firmly fixed around said liner 12.

The coating 14 is also pressed against the extended sleeve part 7. As a result of the presence of the fine teeth 10 on the inner surface of the extended sleeve part 7, the liner 14 and thus the pipe 11 can settle under the influence of the internal pressure within the pipe 11 and can be held with respect to this extended sleeve part 7.

A further settling of the pipe 11 resulting from the high internal pressures can be attained due to the trumpet shape of the extended sleeve part 7.

## Claims

1. High pressure pipe coupling construction, comprising a coupling (1) as well as at least one high pressure pipe (11) connected to said coupling, said pipe having a wall (17) comprising a liner (12), a reinforcement (13) comprising helically wound reinforcement threads (15, 16) surrounding the liner, and a coating (14) surrounding said reinforcement, said coupling (1) comprising a coupling piece (2) provided with an outer sleeve (4) and an inner sleeve (5) having respectively outer (6) and inner (8) sleeve clamping parts which overlap each other and between which an axial end of the pipe wall (17) is clamped, which outer sleeve (4) is provided with an extended sleeve part (7) which protrudes with respect to both overlapping sleeve clamping parts (6, 8) in the direction facing away from said axial end of the pipe wall (17), **characterized in that** the inner surface of the outer sleeve clamping part (6) and at least the adjoining inner surface part of the extended sleeve part (7), when seen in an axial cross section, are in line with each other, that both the sleeve clamping parts and the extended sleeve part have cylindrical surfaces, and **in that** an inner surface of the extended sleeve part (7) which is positioned at a location beyond the inner surface part of the extended sleeve part (7) which adjoins the inner surface of the outer sleeve clamping part (6), when seen in an axial cross section, has a slightly widening shape or trumpet shape in the direction towards the free end of said extended sleeve part.

2. Coupling construction according to claim 1, wherein the sum of the axial length of the outer sleeve clamping part (6) and the axial length of the extended sleeve part (7) is at least 1,5 times the axial length of the inner sleeve clamping part (8).

3. Coupling construction according to any of the preceding claims, wherein the sum of the axial of the outer sleeve clamping part (6) and the axial length of the extended sleeve part (7) is at least 2 times the axial length of the inner sleeve clamping part (8).

4. Coupling construction according to any of the preceding claims, wherein the inner surface of the outer sleeve (4) comprises teeth (9, 10).

5. Coupling construction according to claim 4, wherein the inner surface of the outer sleeve clamping part (6) comprises relatively coarse teeth (9).

6. Coupling construction according to claim 4 or 5, wherein the inner surface of the extended sleeve part (7) comprises relatively fine teeth (10).

7. Coupling construction to any out the preceding claims, wherein the coupling (1) comprises a connection piece (2) for connection to another coupling, to a flange and the like.

8. Coupling construction according to claim 7, wherein the inner diameter of the connection piece (2) is larger than the inner diameter of the inner sleeve clamping part (8).

9. Coupling construction according to claim 7 or 8, wherein the outer diameter of the coupling piece (2) is smaller than the outer diameter of the outer sleeve clamping part (6).

10. Coupling construction according to any of the preceding claims, wherein the reinforcement comprises opposite wound helical threads.

11. Coupling construction according to any of the preceding claims, wherein the reinforcement (13) comprises helically wound tapes which each comprise threads (15, 16) which are juxtaposed, when seen in circumferential direction of the pipe.

12. Coupling construction according to any of the preceding claims, wherein the coupling (1) comprises a metal, such as steel.

13. Coupling construction according to any of the preceding claims, wherein the outer sleeve clamping part (6) and the extended sleeve part (7) form a single unity.

14. Coupling construction according to any of the preceding claims, wherein the reinforcement of threads (15, 16) comprise a high strength material, such as steel wire or aramid.

## Patentansprüche

1. Hochdruckrohrkopplungskonstruktion, eine Kupplung (1) sowie mindestens ein Hochdruckrohr (11) umfassend, das mit der Kupplung verbunden ist, wobei das Rohr eine Wand (17) mit einer Auskleidung (12), eine Verstärkung (13) mit die Auskleidung umgebenden, spiralförmig gewickelten Verstärkungsfasern (15, 16) und eine die Verstärkung umgebende Beschichtung (14) besitzt, wobei die Kupplung (1) ein Kupplungsstück (2) aufweist, das mit einer Außenhülse (4) und einer Innenhülse (5) mit einem äußeren (6) bzw. inneren (8) Hülsenklemmteil versehen ist, die einander überlappen, und zwischen denen ein axiales Ende der Rohrwand (17) eingeklemmt ist, welche Außenhülse (4) mit einem verlängerten Hülsenteil (7) versehen ist, das im Hinblick auf die beiden sich überlappenden Hülsenklemmteile (6, 8) in der vom axialen Ende der Rohrwand (17) weg gewandten Richtung vorsteht, **dadurch gekennzeichnet, dass** die Innenfläche des äußeren Hülsenklemmteils (6) und zumindest der angrenzende Innenflächenabschnitt des verlängerten Hülsenteils (7), in einem axialen Querschnitt gesehen miteinander fluchten, dass beide Hülsenklemmteile und der verlängerte Hülsenteil zylindrische Flächen haben, und dass eine Innenfläche des verlängerten Hülsenteils (7), die sich an einer Stelle jenseits des Innenflächenabschnitts des verlängerten Hülsenteils (7) befindet, der an die Innenfläche des äußeren Hülsenklemmteils (6) angrenzt, in einem axialen Querschnitt gesehen eine sich etwas aufweitende Form oder Trompetenform in Richtung zum freien Ende des verlängerten Hülsenteils hin hat.

2. Kopplungskonstruktion nach Anspruch 1, wobei die Summe aus der axialen Länge des äußeren Hülsenklemmteils (6) und der axialen Länge des verlängerten Hülsenteils (7) mindestens das 1,5-fache der axialen Länge des inneren Hülsenklemmteils (8) beträgt.

3. Kopplungskonstruktion nach einem der vorhergehenden Ansprüche, wobei die Summe aus der axialen Länge des Hülsenklemmteils (6) und der axialen Länge des verlängerten Hülsenteils (7) mindestens das 2-fache der axialen Länge des inneren Hülsenklemmteils (8) beträgt.

4. Kopplungskonstruktion nach einem der vorhergehenden Ansprüche, wobei die Innenfläche der Außenhülse (4) Zähne (9, 10) aufweist.

5. Kopplungskonstruktion nach Anspruch 4, wobei die Innenfläche des äußeren Hülsenklemmteils (6) relativ grobe Zähne (9) aufweist.

6. Kopplungskonstruktion nach Anspruch 4 oder 5, wobei die Innenfläche des verlängerten Hülsenteils (7) relativ feine Zähne (10) aufweist.

7. Kopplungskonstruktion nach einem der vorhergehenden Ansprüche, wobei die Kupplung (1) ein Verbindungsstück (2) zum Verbinden mit einer anderen Kupplung, an einen Flansch o. dgl., aufweist.

8. Kopplungskonstruktion nach Anspruch 7, wobei der Innendurchmesser des Verbindungsstücks (2) größer ist als der Innendurchmesser des inneren Hülsenklemmteils (8).

9. Kopplungskonstruktion nach Anspruch 7 oder 8, wobei der Außendurchmesser des Kupplungsstücks (2) kleiner ist als der Außendurchmesser des äußeren Hülsenklemmteils (6).

10. Kopplungskonstruktion nach einem der vorhergehenden Ansprüche, wobei die Verstärkung entgegengesetzt gewickelte Spiralfäden umfasst.

11. Kopplungskonstruktion nach einem der vorhergehenden Ansprüche, wobei die Verstärkung (13) spiralförmig gewickelte Bänder umfasst, die jeweils Fäden (15, 16) umfassen, die, in der Umfangsrichtung des Rohrs gesehen, nebeneinander liegen.

12. Kopplungskonstruktion nach einem der vorhergehenden Ansprüche, wobei die Kupplung (1) ein Metall wie etwa Stahl aufweist.

13. Kopplungskonstruktion nach einem der vorhergehenden Ansprüche, wobei das äußere Hülsenklemmteil (6) und das verlängerte Hülsenteil (7) eine einzige Einheit bilden.

14. Kopplungskonstruktion nach einem der vorhergehenden Ansprüche, wobei die Verstärkung aus Fäden (15, 16) ein hochfestes Material wie etwa Stahldraht oder Aramid umfasst.

## Revendications

1. Construction de raccord pour un tuyau à haute pression comprenant un raccord (1) ainsi qu'au moins un tuyau à haute pression (11) raccordé audit raccord, ledit tuyau ayant une paroi (17) comprenant une chemise (12), un renforcement (13) comprenant des filetages de renforcement (15, 16) enroulés de manière hélicoïdale entourant la chemise, et un revêtement (14) entourant ledit renforcement, ledit raccord (1) comprenant une pièce de raccord (2) prévue avec un manchon externe (4) et un manchon interne (5) ayant respectivement des parties de serrage de manchon externe (6) et interne (8) qui se chevauchent et entre lesquelles une extrémité axiale de la paroi de tuyau (17) est serrée, lequel manchon externe (4) est prévu avec une partie de manchon étendue (7) qui fait saillie par rapport aux deux parties de serrage de manchon (6, 8) qui se chevauchent dans la direction faisant face à distance à ladite extrémité axiale de la paroi de tuyau (17), **caractérisée en ce que** la face interne de la partie de serrage de manchon externe (6) et au moins la partie de surface interne attenante de la partie de manchon étendue (7), lorsqu'elles sont observées dans une section transversale axiale, sont alignées l'une par rapport à l'autre, **en ce que** les deux parties de serrage de manchon et la partie de manchon étendue ont des surfaces cylindriques, et **en ce qu'**une surface interne de la partie de manchon étendue (7) qui est positionnée à un emplacement situé au-delà de la partie de surface interne de la partie de manchon étendue (7) qui est attenante à la surface interne de la partie de serrage de manchon externe (6), lorsqu'elle est observée dans une section transversale axiale, a une forme s'élargissant légèrement ou une forme de trompette dans la direction allant vers l'extrémité libre de ladite partie de manchon étendue.

2. Construction de raccord selon la revendication 1, dans laquelle la somme de la longueur axiale de la partie de serrage de manchon externe (6) et de la longueur axiale de la partie de manchon étendue (7) représente au moins 1,5 fois la longueur axiale de la partie de serrage de manchon interne (8).

3. Construction de raccord selon l'une quelconque des revendications précédentes, dans laquelle la somme de la longueur axiale de la partie de serrage de manchon externe (6) et de la longueur axiale de la partie de manchon étendue (7) représente au moins deux fois la longueur axiale de la partie de serrage de manchon interne (8).

4. Construction de raccord selon l'une quelconque des revendications précédentes, dans laquelle la surface interne du manchon externe (4) comprend des dents (9, 10).

5. Construction de raccord selon la revendication 4, dans laquelle la surface interne de la partie de serrage de manchon externe (6) comprend des dents relativement grossières (9).

6. Construction de raccord selon la revendication 4 ou 5, dans laquelle la surface interne de la partie de manchon étendue (7) comprend des dents relativement fines (10).

7. Construction de raccord selon l'une quelconque des revendications précédentes, dans laquelle le raccord (1) comprend une pièce de raccordement (2) pour le raccordement à un autre raccord, à une bride et similaire.

8. Construction de raccord selon la revendication 7, dans laquelle le diamètre interne de la pièce de raccordement (2) est plus grand que le diamètre interne de la partie de serrage de manchon interne (8).

9. Construction de raccord selon la revendication 7 ou 8, dans laquelle le diamètre externe de la pièce de couplage (2) est plus petit que le diamètre externe de la partie de serrage de manchon externe (6).

10. Construction de raccord selon l'une quelconque des revendications précédentes, dans laquelle le renforcement comprend des filetages hélicoïdaux enroulés opposés.

11. Construction de raccord selon l'une quelconque des revendications précédentes, dans laquelle le renforcement (13) comprend des bandes enroulées de manière hélicoïdale qui comprennent chacune des filetages (15, 16) qui sont juxtaposés, lorsqu'ils sont observés dans la direction circonférentielle du tuyau.

12. Construction de raccord selon l'une quelconque des revendications précédentes, dans laquelle le raccord (1) comprend un métal, tel que l'acier.

13. Construction de raccord selon l'une quelconque des revendications précédentes, dans laquelle la partie de serrage de manchon externe (6) et la partie de manchon étendue (7) forment une seule unité.

14. Construction de raccord selon l'une quelconque des revendications précédentes, dans laquelle le renforcement des filetages (15, 16) comprend un matériau à haute résistance, tel qu'un fil d'acier ou de l'aramide.
